# EUROPEAN PATENT SPECIFICATION

(11) **EP 2 073 659 B1**
(45) Date of publication and mention of the grant of the patent: **19.06.2013**
(21) Application number: 07873342.5
(22) Date of filing: 11.10.2007
(51) Int. Cl.: A44B 18/00, B29C 44/12, B60N 2/70, B29C 33/16, B60N 2/72

(54) **FASTENER SYSTEMS FOR SEAT CUSHIONS**
BEFESTIGUNGSSYSTEME FÜR SITZPOLSTER
SYSTÈMES DE FIXATION POUR COUSSINS DE SIÈGE

(30) Priority: 17.10.2006 US 829761 P
(43) Date of publication of application: 01.07.2009
(73) Proprietor: VELCRO INDUSTRIES B.V., Curacao (AN)
(72) Inventor: JANZEN, Daniel, Lee, Brampton, Ontario L6X 4J7 (CA); LINE, Kevin, Keith, Port Severn, Ontario L0K 1S0 (CA)
(74) Representative: Peterreins, Frank
(86) International application number: PCT/IB2007/004528
(87) International publication number: WO 2008/117120

(56) References cited:
- EP-A- 1 002 476
- JP-A- 6 237 807
- US-A- 5 260 015
- US-A1- 2005 196 599

## Description

### TECHNICAL FIELD

The present invention is directed to fastener systems for seat cushions, methods of attaching seat covers during the manufacture of automotive seats, and to seat cushions manufactured by such methods.

### BACKGROUND

In recent years seats for cars and light trucks have been formed by molding a foam bun that will serve as the seat cushion, and then attaching a pre-stitched fabric cover to the foam bun. Often, the fabric cover is attached to the foam bun by insert molding touch fastener strips into the outer surface of the foam bun and attaching cooperating touch fastener strips to an inner surface of the fabric cover. Generally, the fastener strips are attached to the fabric cover along the seams where the cover is stitched together and held in place by the seam stitching. The touch fastener strips allow the seat manufacturer to rapidly and semi-permanently attach the fabric cover to the foam bun by pulling the fabric cover over the foam bun and pressing the opposed touch fastener strips on the foam bun and fabric cover together.

The touch fastener strips on the foam bun are typically recessed in trenches to allow the seams in the fabric cover to be indented below the surface of the seat cushion. Indenting the seams in this manner forms aesthetically appealing indented creases in the surface of the seat cushion upholstery for a tailored look.

Conventionally, the touch fastener is positioned in the mold such that the touch fastening surface is flush against a surface of the mold causing the touch fastening surface to be exposed in the finished foam product. Accordingly, when using such a molding process, care must be taken to avoid fouling of the touch fastening surface with the liquid foamable composition. It is also important that the back of the touch fastener adhere well to the finished foam product.

It is known from document JP 06 237807 a fastener product having a fastener tape carrying male elements ion a first side and a foam layer on a second side opposite side, with a further layer adjacent the foam layer.

Furthermore, document EP 1 002 476 discloses a method for making a foam bun using a band comprising: preparing a fastener product having a foam layer, a metallic layer and a layer carrying fastener elements; positioning the fastener product in a mold; pouring plastic material in the mold; and solidifying the plastic material.

### SUMMARY

In one aspect, the present disclosure features a fastener product including (a) a fastener tape carrying male fastener elements on a first side, (b) a foam layer bonded to a second, opposite side of the fastener tape, and (c) a polymeric film having a surface energy of at least 35 dynes/cm adjacent the foam layer and exposed for contact by a liquid polymer during molding.

Some implementations include one or more of the following features. The polymeric film may have a surface energy greater than 45 dynes/cm. The polymeric film may be selected from the group consisting of polyurethane films, nylon films and polyester films. The fastener elements may be integrally molded with a sheet-form base. The fastener product may include a fabric reinforcement layer, for example interposed between the foam layer and the hook tape. The film may be wider than the foam layer. The fastener tape may comprise a base having a predetermined width between longitudinal edges, and the foam layer may have a width greater than the predetermined width of the base, such that edges of the foam layer extend beyond the longitudinal edges of the base.

In another aspect, the disclosure features a method of making a foam bun, the method comprising: (a) providing a fastener product comprising a fastener tape carrying male fastener elements on a first side, a foam layer bonded to a second, opposite side of the fastener tape, and a polymeric film having a surface energy of at least 35 dynes/cm adjacent the foam layer and exposed for contact by a liquid polymer during molding; (b) engaging the film with an upper trench edge, and compressing the foam between trench walls to sealingly position the fastener tape in a trench in a mold cavity; and (c) delivering a liquid polymer to the mold cavity.

Some implementations include one or more of the following features. The polymeric film has a surface configured so as not to disrupt flow of liquid polymer over the film during molding, allowing the foamable resin to pass over the touch fastener without creating a significant disturbance in the flow of the resin (for example, as can occur when the advancing foamable resin meets an impediment), which disturbance can result in undesirable variations in foam density and voiding at the interface between the touch fastener and the foamed resin. We have observed that such voiding can undesirably affect adhesion of the foamed resin to the touch fastener. To avoid disruption of flow, the methods described herein may include positioning the fastener tape so that the surface of the polymeric film is even with a top surface of the trench. Moreover, the polymeric film may have a non-porous surface, minimizing infiltration of the foamable resin into the surface.

The touch fasteners described herein provide features that are useful in molding processes. For example, the foam can provide a seal or barrier, which prevents material, e.g., foaming material, from entering into the area between the fastener elements, and accordingly, can significantly reduce fouling of the touch fastener. The touch fastener can be positioned in a trench or other confined mold area and held in place by the seal between the foam and mold surface, without the need for magnets or other retention devices (although magnets or other such devices may be used if desired). The film layer provides good adhesion between the touch fastener and the foamable materials. The film layer also smoothes flow of the foamable material over the touch fastener surface, typically yielding, at the interface between the touch fastener and the foam of the final molded product, a uniform, dense foam with a small bubble structure. The touch fasteners described herein can be produced with only relatively minor modifications of known manufacturing processes.

The details of one or more embodiments of the invention are set forth in the accompanying drawings and the description below. Other features and advantages of the invention will be apparent from the description and drawings, and from the claims.

### DESCRIPTION OF DRAWINGS

Fig. 1 is a cross-sectional view of a touch fastener according to one implementation.
Fig. 2A shows the touch fastener of Fig. 1 being placed in a trench in a mold cavity. Fig. 2B shows the touch fastener in place in the trench.
Fig. 3 is a cross-sectional view of a touch fastener according to another embodiment of the invention.
Figs. 4A, 4B and 4C are partial cross-sectional views showing one side wall of trenches having different configurations.
Figs. 5A and 5B show a touch fastener in use in a molding operation.

### DETAILED DESCRIPTION

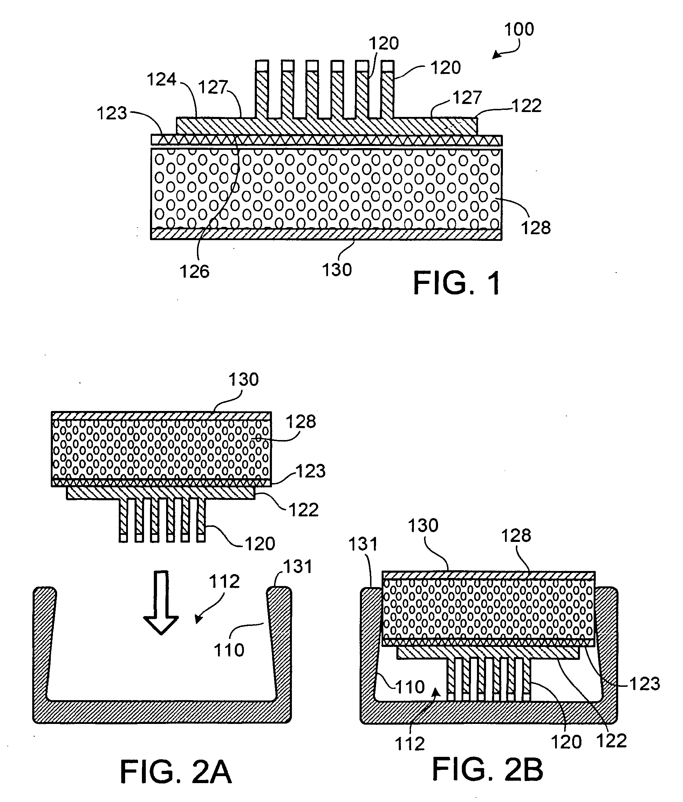

Referring to Fig. 1, a touch fastener 100 includes a plurality of fastener elements 120 (e.g., hooks) and a sheet form base 122 having an upper face 124 and a lower face 126. Fastener elements 120 extend from the upper face 124 of the sheet-form base 122. A textile layer 123 is bonded to the lower face 126 of the sheet foam base, and a foam 128 is bonded to the textile layer. A polymeric film 130 forms the outer layer of the touch fastener 100 on the backside.

The textile layer 123 is generally laminated to the foam layer 128 before the other layers arc laminated together, and provides dimensional stability to the foam during the lamination process. Any desired fabric or scrim may be used. Preferably, to enhance dimensional stability, the textile layer exhibits relatively little elongation.

The foam 128 is configured to be press-fit into the trench 112 of a mold cavity (see Fig. 2A). Compression of the foam forms a seal with the mold surface 110 surrounding the trench (see Fig. 2B) when the touch fastener is correctly positioned within the trench. The resulting seal holds the touch fastener in place during molding, without the need for magnetic attachment or other means of attachment. The seal also helps to prevent fouling of the fastener elements during the molding process. The film 130 provides an outer surface to which the liquid foamable material can adhere during molding. Preferably, as shown in Fig. 2A, the film is substantially flush with the upper surface 131 of the trench (i.e., the wall of the molding cavity into which the foamable material is delivered).

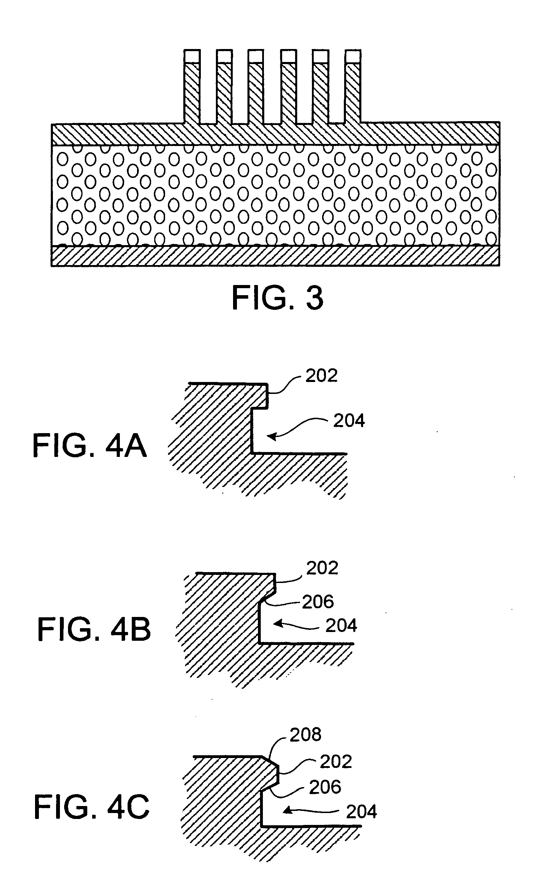

In the embodiment shown in Fig. 1, the foam, the film and the fabric layer extend beyond the edges of the resin portion of the sheet-form base. This allows the foam to be compressed by the walls of the trench, without buckling the sheet-form base. In some implementations, however (e.g., as shown in FIG. 3), foam 128 may cover substantially the entire sheet form base 122, allowing strips of the touch fastener 100 to be easily cut, e.g., by die-cutting. In other implementations, the film 130 extends beyond the foam layer, allowing the film to overlie the top surface 131 of the trench to engage the mold surface in face-to-face contact and thereby provide a seal and smooth flow of the foaming resin over the interface between the touch fastener and trench.

The film is preferably a very thin polymeric film. For example, the film may have a nominal thickness of less than about 0.010 inch, preferably from about 0.004 inch to 0.006 inch. The film is preferably formed of a polymer to which the foamable material will exhibit good adhesion. For most typically used foamable materials, for example polyurethanes, suitable films include polyurethanes, polyamides (nylons) and polyesters. It is generally preferred that the film have a relatively high surface energy, e.g., greater than 35 dynes/cm and preferably greater than 45 dynes/cm.

One objective, in selecting a film, is to provide a surface which will smooth flow of the foamable material within the mold cavity, rather than hindering flow. Smooth flow of the foamable material will tend to minimize voiding at the interface between the film and foamed material in the finished product. To this end, it is generally preferred that the film be substantially non-porous, and have a smooth (glossy or matte) surface. In some implementations, the film has an average surface roughness less than 100 µ, more preferably less than 1.0 µm. Average surface roughness (Rₐ) is determined by generating a roughness profile of the surface (see ISO 4288:1996; Geometrical product specifications (GPS) - Surface texture: Profile method), and integrating the area between the roughness profile and its mean line. Preferably the mean spacing (Sₘ) of profile irregularities (peaks) on the roughness profile is less than 250 µm, more preferably less than 2.5 µm.

It is also generally preferred that the film lie relatively flat on the surface of the underlying layer, as shown in Fig. 1. However, if desired the film may not be entirely flat. For example, the film may be laminated over an underlying object, e.g., a wire, as disclosed in U.S. Serial No. 10/791,204, filed on March 2, 2004, and U.S. Serial No. 60/829,822, a provisional application filed on October 17, 2006 and titled "Touch Fastener Products" (Attorney Docket No. 05918-435P01), the full disclosures of which are incorporated herein by reference. In this case, it is desirable that the change in height between the flat areas of the film and the raised areas overlying the object be relatively gradual and smooth, avoiding any steep or sharp discontinuities that could hinder flow of the foamable resin.

The foam may be, for example, a flexible polyurethane foam. Preferably, the foam layer is about 1 to 6 mm thick, more preferably about 3 to 4 mm thick. In some implementations, the foam has a Sag Factor (Indentation Force Deflection at 65%/Indentation Force Deflection at 25%) of about 2.4 to 2.8, more preferably about 2.6 to 2.7, where Indentation Force Deflection is measured according to ASTM D5672-03. Some preferred foams also have a tensile strength greater than 82 kPa, more preferably greater than 90 kPa.

In general, the array of touch fasteners is an array of hooks having a length of about 200 mm and a width of about 4 mm. The sheet form base is constructed from a resin, such as a polyester, polypropylene, nylon, or other thermoplastic, and may have a nominal thickness of about 0.002 and 0.020 inch, for example 0.005 inch.

In some implementations, for example when the foam has sufficient tensile strength and/or thickness to withstand processing, the textile layer 123 may be omitted. A touch fastener 200 that includes only a fastener tape, foam layer and film, is shown in FIG. 3. In the implementation shown in FIG. 3, the layers are all of the same width. However, the textile layer may also be omitted in constructions where the layers have different relative widths.

The geometry of the trench shape may be selected to facilitate placement of the touch fastener, sealing of the touch fastener against the trench walls, and/or flow of the foamable resin over the top surface of the film 130. Examples of preferred trench geometries are shown in FIGS. 4A-4C. In each case, the trench has a stepped undercut design, i.e., the trench includes a narrowing bulge 202, which compresses the foam to form a seal between the foam and the trench wall, and a wider area 204 to accommodate the fastener tape without buckling it, e.g., in embodiments in which the fastener tape is as wide as the foam. The trench design shown in FIG. 4B includes a lead-in 206, to facilitate removal of the touch fastener from the trench. The trench design shown in FIG. 4C includes two lead-ins 206, 208, to facilitate both placement and removal of the touch fastener.

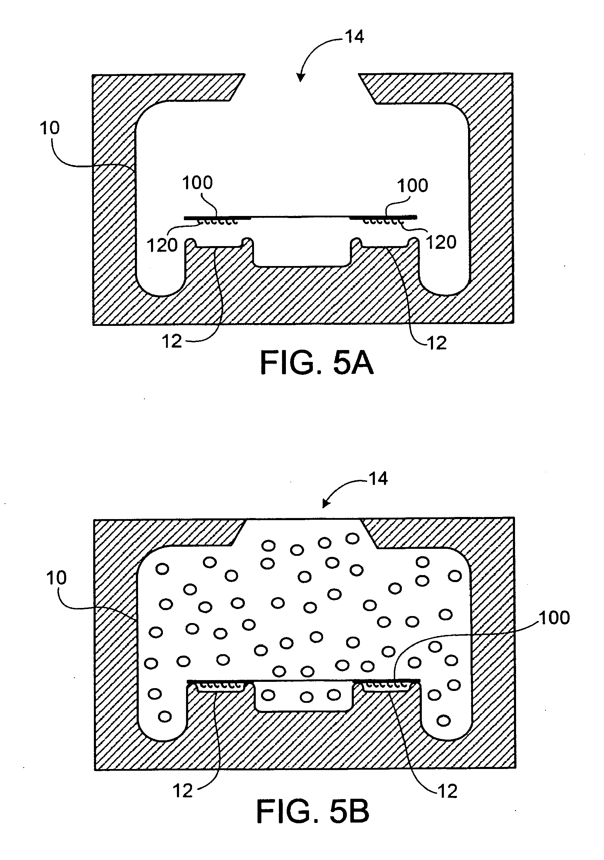

In use, referring to Fig. 5A, a touch fastener 100 is placed in a mold cavity 14 with the fastener elements 20 positioned adjacent a depression 12 in a mold surface 10 for the positioning of the touch fastener 100. Referring to Fig. 1B, once the touch fastener 100 is correctly positioned into the depression 112 in the mold surface 10, a liquid foaming material 111, such as a two component system, is poured or injected into the mold cavity 114. The foaming material then solidifies, and the entire foam block is removed with the touch fasteners 100 adhered to its surface.

The touch fasteners described above can be made in a continuous sheet form and cut into any shape.

The touch fasteners may be manufactured in continuous sheet form using, for example, the continuous extrusion/roll-forming method for molding fastener elements on an integral, sheet-form base described in detail in U.S. Patent No. 4,794,028, the disclosure of which is incorporated herein by reference. The film may be flame laminated to the foam, or alternatively may be adhered to the foam with an adhesive. When the foam is pre-laminated to a fabric layer, the fastener tape may be extruded directly onto the fabric layer. When no fabric layer is used, the fastener tape can be flame laminated to the foam. The foam can also be introduced to the nip with the resin used to form the fastener tape, and laminated directly to the fastener tape as it is being formed. Processes for laminating a sheet material to a fastener tape in this manner are described, for example, in U.S. Patent No. 5,260,015, the full disclosure of which is incorporated by reference. If desired, the foam may be bonded to the fastener tape using an adhesive.

In some implementations, the touch fasteners can be die-cut. Suitable processes for cutting a touch fastener into a shape by die cutting are described, e.g., in U.S. Patent No. 5,286,431, to Banfield et al., entitled MOLDED PRODUCT HAVING INSERT MOLD-IN FASTENER, the entire disclosure of which is herein incorporated by reference, and are further described in U.S. Patent No. 5,766,385, to Pollard et al., entitled SEPARABLE FASTENER HAVING DIE-CUT PROTECTIVE COVER WITH PULL TAB AND METHOD OF MAKING SAME, the entire disclosure of which is incorporated herein by reference.

After a continuous length of touch fastener 100 is formed, it is cut to a defined length and then in some implementations male fastener elements are removed from opposite longitudinal ends of the array to provide flat portions 127 (Fig. 1) of the upper face 124 of the sheet-form base. The flat portions of the lower face of the sheet form base may extend longitudinally beyond the fastener array about 4 mm.

The touch fasteners described herein may be configured to follow curves in a mold cavity, e.g., as described in U.S. Serial No. 60/829,836, filed on October 17, 2006 and titled "Touch Fastener Products" (Attorney Docket No. 05918-434P01), the full disclosure of which is incorporated herein by reference.

A number of embodiments of the invention have been described. Nevertheless, it will be understood that various modifications may be made without departing from the spirit and scope of the invention.

For example, while the features described above generally permit the touch fasteners to be used without the need for magnetic attraction between the trench and touch fastener, if desired the touch fastener can contain a magnetically attractable material and the trench can include a magnet. For example, the touch fastener may include an iron wire or strip, iron particles, or a coating or scrim containing a magnetically attractable material.

Moreover, while preferred embodiments arc described above in which the trench has a stepped undercut design, the touch fasteners described herein may also be used with other trench geometries, including straight sided trenches.

Accordingly, other embodiments are within the scope of the following claims.

## Claims

1. A fastener product comprising:
a fastener tape carrying male fastener elements (120) on a first side (124),
a foam layer (128) bonded to a second, opposite side (126) of the fastener tape,
**characterized in that** the fastener product further comprises a polymeric film (130) having a surface energy of at least 35 dynes/cm adjacent the foam layer (128) and exposed for contact by a liquid polymer during molding.

2. The fastener product of claim 1 wherein the polymeric film (130) has a surface energy greater than 45 dynes/cm.

3. The fastener product of claim 1 wherein the polymeric film (130) is selected from the group consisting ofpolyurethane films, nylon films and polyester films.

4. The fastener product of claim 1 wherein the fastener elements (120) are integrally molded with a sheet-form base (122).

5. The fastener product of claim 1 further including a fabric reinforcement layer (123), optionally the fabric reinforcement layer (123) is interposed between the foam layer (128) and the fastener tape.

6. The fastener product of claim 1 wherein the film (130) is wider than the foam layer (128).

7. The fastener product of claim 1 wherein the fastener tape comprises a base (122) having a predetermined width between longitudinal edges, the foam layer (128) having a width greater than the predetermined width of the base (122), such that edges of the foam layer extend beyond the longitudinal edges of the base.

8. A method of making a foam bun, the method comprising:
providing a fastener product (100) comprising a fastener tape carrying male fastener elements (120) on a first side (124), a foam layer (128) bonded to a second, opposite side (126) of the fastener tape, and a polymeric film (130) having a surface energy of at least 35 dynes/cm adjacent the foam layer (128) and exposed for contact by a liquid polymer during molding;
engaging the film (130) with an upper trench edge, and compressing the foam between trench walls to sealingly position the fastener tape in a trench (12; 112) in a mold cavity (14); and
delivering a liquid polymer to the mold cavity (14).

9. The method of claim 8 wherein the polymeric film (130) has a surface configured so as not to disrupt flow of liquid polymer over the film during molding, optionally wherein the polymeric film has a surface energy greater than 35 dynes/cm.

10. The method of claim 8 further comprising positioning the fastener tape so that the surface of the polymeric film (130) is even with a top surface (131) of the trench (12; 112), or wherein the polymeric film (130) has a non-porous surface, or wherein the trench (12; 112) has, in cross-section, a stepped undercut configuration (202, 204).

11. The method of claim 8 wherein the polymeric film (130) is selected from the group consisting of polyurethane films, nylon films and polyester films.

12. The method of claim 9 wherein the fastener elements (120) are integrally molded with a sheet-form base (122).

13. The method of claim 9 further including a fabric reinforcement layer (123), optionally the fabric reinforcement layer (123) is interposed between the foam layer (128) and the hook tape.

14. The method of claim 9 wherein the film (130) is wider than the foam layer (128).

15. The method of claim 9 wherein the fastener tape comprises a base (122) having a predetermined width between longitudinal edges, the foam layer (128) having a width greater than the predetermined width of the base (122), such that edges of the foam layer extend beyond the longitudinal edges of the base.

## Patentansprüche

1. Befestigungsprodukt umfassend:
ein Befestigungsband, das männliche Befestigungselemente (120) auf einer ersten Seite (124) trägt,
eine Schaumstoffschicht (128), die an eine zweite, gegenüberliegende Seite (126) des Befestigungsbands gebunden ist,
**dadurch gekennzeichnet, dass** das Befestigungsprodukt angrenzend an die Schaumstoffschicht (128) eine Polymerfolie (130) umfasst mit einer Oberflächenenergie von mindestens 35 dyn/cm und freiliegend, um mit einem flüssigen Polymer während des Formens in Kontakt zu treten.

2. Befestigungsprodukt nach Anspruch 1, wobei die Polymerfolie (130) eine Oberflächenenergie von mehr als 45 dyn/cm hat.

3. Befestigungsprodukt nach Anspruch 1, wobei die Polymerfolie (130) ausgewählt ist aus der Gruppe bestehend aus Polyurethanfolien, Nylonfolien und Polyesterfolien.

4. Befestigungsprodukt nach Anspruch 1, wobei die Befestigungselemente (120) direkt mit einer Basis in Blattform (122) geformt sind.

5. Befestigungsprodukt nach Anspruch 1, außerdem beinhaltend eine Gewebe-Verstärkungsschicht (123), optional wobei die Gewebe-Verstärkungsschicht (123) zwischen der Schaumstoffschicht (128) und dem Befestigungsband eingefügt ist.

6. Befestigungsprodukt nach Anspruch 1, wobei die Folie (130) breiter ist als die Schaumstoffschicht (128).

7. Befestigungsprodukt nach Anspruch 1, wobei das Befestigungsband eine Basis (122) umfasst mit einer vorbestimmten Breite zwischen den Längskanten, wobei die Schaumstoffschicht (128) eine größere Breite als die vorbestimmte Breite der Basis (122) hat, sodass sich die Kanten der Schaumstoffschicht über die Längskanten der Basis erstrecken.

8. Verfahren zum Herstellen eines Schaumstoffteils, wobei das Verfahren die folgenden Schritte umfasst:
Bereitstellen eines Befestigungsprodukts (100) umfassend ein Befestigungsband, das männliche Befestigungselemente (120) auf einer ersten Seite (124) trägt, eine Schaumstoffschicht (128), die an eine zweite, gegenüberliegende Seite (126) des Befestigungsbands gebunden ist, und eine Polymerfolie (130) mit einer Oberflächenenergie von mindestens 35 dyn/cm, angrenzend an die Schaumstoffschicht (128) und freiliegend, um mit einem flüssigen Polymer während des Formens in Kontakt zu treten;
Anbringen der Folie (130) an einer oberen Rinnenkante und Zusammenpressen des Schaumstoffs zwischen den Wänden der Rinne, um das Befestigungsband in einer Rinne (12; 112) in einem Formhohlraum (14) versiegelt zu positionieren; und
Zuführen eines flüssigen Polymers in den Formhohlraum (14).

9. Verfahren nach Anspruch 8, wobei die Polymerfolie (130) eine Oberfläche aufweist, die ausgelegt ist, um den Fluss des flüssigen Polymers über die Folie während des Formens nicht zu stören, optional wobei die Polymerfolie eine Oberflächenenergie von mehr als 35 dyn/cm hat.

10. Verfahren nach Anspruch 8, weiter umfassend das Positionieren des Befestigungsbands, sodass die Oberfläche der Polymerfolie (130) eben mit einer oberen Oberfläche (131) der Rinne (12; 112) ist, oder wobei die Polymerfolie (130) eine nicht-poröse Oberfläche hat, oder wobei die Rinne (12; 112) im Querschnitt eine stufenförmig unterhöhlte Konfiguration (202, 204) aufweist.

11. Verfahren nach Anspruch 8, wobei die Polymerfolie (130) ausgewählt ist aus der Gruppe bestehend aus Polyurethanfolien, Nylonfolien und Polyesterfolien.

12. Verfahren nach Anspruch 9, wobei die Befestigungselemente (120) direkt mit einer Basis in Blattform (122) geformt sind.

13. Verfahren nach Anspruch 9, außerdem beinhaltend eine Gewebe-Verstärkungsschicht (123), optional wobei die Gewebe-Verstärkungsschicht (123) zwischen der Schaumstoffschicht (128) und dem Befestigungsband eingefügt ist.

14. Verfahren nach Anspruch 9, wobei die Folie (130) breiter ist als die Schaumstoffschicht (128).

15. Verfahren nach Anspruch 9, wobei das Befestigungsband eine Basis (122) umfasst mit einer vorbestimmten Breite zwischen den Längskanten, wobei die Schaumstoffschicht (128) eine größere Breite als die vorbestimmte Breite der Basis (122) hat, sodass sich die Kanten der Schaumstoffschicht über die Längskanten der Basis erstrecken.

## Revendications

1. Produit fermoir comprenant :
un ruban fermoir portant des éléments fermoirs mâles (120) sur une première face (124),
une couche de mousse (128) liée à une seconde face op¬po¬sée (126) du ruban fermoir,
**caractérisé en ce que** le produit fermoir comprend en ou¬tre un film polymère (130) possédant une énergie su¬per¬ficielle d'au moins 35 dynes/cm adjacent à la couche de mousse (128) et exposé pour être contacté par un po¬ly¬mère liquide pendant le moulage.

2. Produit fermoir selon la revendication 1 dans le¬quel le film polymère (130) possède une énergie super¬ficielle supérieure à 45 dynes/cm.

3. Produit fermoir selon la revendication 1 dans le¬quel le film polymère (130) est choisi dans le groupe cons¬titué par les films de polyuréthane, les films de nylon et les films de polyester.

4. Produit fermoir selon la revendication 1 dans le¬quel les éléments fermoirs (120) sont moulés d'un seul tenant avec une base en forme de feuille (122).

5. Produit fermoir selon la revendication 1 renfer-mant en outre une couche de renfort en tissu (123), éven¬tuellement la couche de renfort en tissu (123) est intercalée entre la couche de mousse (128) et le ruban fermoir.

6. Produit fermoir selon la revendication 1 dans le¬quel le film (130) est plus large que la couche de mousse (128).

7. Produit fermoir selon la revendication 1 dans le¬quel le ruban fermoir comprend une base (122) présen¬tant une largeur prédéterminée entre les bords longitu¬dinaux, la couche de mousse (128) ayant une largeur su¬pé¬rieure à la largeur prédéterminée de la base (122), de telle sorte que les bords de la couche de mousse se prolongent au-delà des bords longitudinaux de la base.

8. Procédé de fabrication d'un coussinet en mousse, le procédé comprenant les étapes consistant à :
se procurer un produit fermoir (100) comprenant un ru¬ban fermoir portant des éléments fermoirs mâles (120) sur une première face (124), une couche de mousse (128) liée à une seconde face opposée (126) du ruban fermoir, et un film polymère (130) possédant une énergie super¬ficielle d'au moins 35 dynes/cm adjacent à la couche de mousse (128) et exposé pour être contacté par un polymère liquide pendant le moulage ;
engager le film (130) avec un bord supérieur de la tran¬chée, et comprimer la mousse entre les parois de la tranchée pour positionner de façon étanche le ruban fermoir dans une tranchée (12, 112) dans un creux du moule (14) ; et
amener un polymère liquide dans le creux du moule (14).

9. Procédé selon la revendication 8 dans lequel le film polymère (130) possède un surface configurée de ma¬nière à ne pas interrompre l'écoulement du polymère liquide sur le film pendant le moulage, éventuellement dans lequel le film polymère possède une énergie super¬ficielle supérieure à 35 dynes/cm.

10. Procédé selon la revendication 8 comprenant en outre le fait de positionner le ruban fermoir de telle façon que la surface du film polymère (130) soit au même niveau qu'une surface de dessus (131) de la tran¬chée (12, 112), ou dans lequel film polymère (130) pos¬sède une surface non poreuse, ou dans lequel la tran¬chée (12, 112) possède, en section droite, une con¬fi¬gu¬ration d'encoche étagée (202, 204).

11. Procédé selon la revendication 8 dans lequel le film polymère (130) est choisi dans le groupe constitué par les films de polyuréthane, les films de nylon et les films de polyester.

12. Procédé selon la revendication 9 dans lequel les éléments fermoirs (120) sont moulés d'un seul tenant avec une base en forme de feuille (122).

13. Procédé selon la revendication 9 renfermant en outre une couche de renfort en tissu (123), éventuel-le¬ment la couche de renfort en tissu (123) est intercalée entre la couche de mousse (128) et le ruban fermoir.

14. Procédé selon la revendication 9 dans lequel le film (130) est plus large que la couche de mousse (128).

15. Procédé selon la revendication 9 dans lequel le ruban fermoir comprend une base (122) ayant une largeur prédéterminée entre les bords longitudinaux, la couche de mousse (128) ayant une largeur supérieure à la lar¬geur prédéterminée de la base (122), de telle sorte que les bords de la couche de mousse se prolongent au-delà des bords longitudinaux de la base.
